# EUROPEAN PATENT APPLICATION

(11) **EP 1 722 292 A2**
(43) Date of publication of application: **15.11.2006**
(21) Application number: 06252181.0
(22) Date of filing: 21.04.2006
(51) Int. Cl.: G06F 3/02, H01H 13/70

(54) **El-illuminated switch**

(30) Priority: 09.05.2005 JP 2005136499
(71) Applicant: HOSIDEN CORPORATION, Yao-shi, Osaka 581-0071 (JP)
(72) Inventor: Shigeno, Yasuhiro c/o Hosiden Corporation, Yao-shi, Osaka 581-0071 (JP); Takehara, Naoya c/o Hosiden Corporation, Yao-shi, Osaka 581-0071 (JP); Mine, Keiji c/o Hosiden Corporation, Yao-shi, Osaka 581-0071 (JP); Sasada, Kosuke c/o Hosiden Corporation, Yao-shi, Osaka 581-0071 (JP)
(74) Representative: Beresford, Keith Denis Lewis

(57) **Abstract**

The deterioration of an EL element due to outside pressure can be restrained without causing unevenness of illumination.
It has an EL sheet (10), a rubber sheet (20), a dome switch (40), and a substrate (30). In the EL sheet (10), a luminescent part (15) is formed at a position directly under a key top (50). The size of the luminescent part (15) is set to be smaller as compared with the key top (50). A transparent electrode (14) is disposed on the front surface side of the luminescent part (15), and a back surface electrode (16) is disposed on the rear surface side. The size of the transparent electrode (14) is set to be larger than that of the luminescent part (15). The back surface electrode (16) includes an electrode principal part (161) that is in contact with the back surface of the luminescent part (15) and isolated from the lower sheet.

## Description

### [FIELD OF THE ART]

The present invention relates to an EL-illuminated switch that is used in an input operation part of mobile station wireless communication apparatus, PDA (Personal Digital Assistants), other portable information terminal apparatus, and the like.

### [BACKGROUND ART]

As a representative example of a conventional EL-illuminated switch, there is one with a structure having a click part made of a transparent synthetic resin sheet to have a dome shape disposed at a position directly under a key top or button and having an EL (Electro Luminescence) sheet disposed on a lower surface of the synthetic resin sheet (for example, Patent Document 1 and others).
[Patent Document 1] Japanese Patent Application Laid-Open (JP-A) No. 11-39983

### [DISCLOSURE OF THE INVENTION]

However, according to the above-described conventional example, there is a problem that since it has a construction such that a pressing force of the key top or button is applied directly on the EL sheet via the synthetic resin sheet, an EL element contained in the EL sheet is liable to be deteriorated by outside pressure. Nevertheless, when the arrangement of the EL sheet is subjected to change of design so that the pressing force of the key top may not be applied directly on the EL sheet, it will be difficult to illuminate the whole surface of the key top uniformly, though the problem of deterioration of the EL element will be solved. This consequently impairs the significance of illuminating the key top with use of the EL element.

The present invention has been devised in view of the aforementioned circumstances, and a concern thereof is to provide an EL-illuminated switch capable of restraining the deterioration of the EL element due to outside pressure without causing unevenness of illumination.

### [MEANS FOR:SOLVING THE PROBLEMS]

The first EL-illuminated switch of the present invention is an EL-illuminated switch that is disposed on a back surface side of a key top or button and illuminates the key top with light, including a substrate; an EL sheet disposed on the substrate and having one or plural luminescent parts formed at a position directly under the key top; a rubber sheet disposed directly under the EL sheet; and a switch contact part disposed on the substrate at a position under the luminescent part and having a point of contact that is switched by pressing of the key top.

The second EL-illuminated switch of the present invention includes a substrate; an EL sheet which is a flexible thin film disposed on the substrate and including a resist layer, wherein the resist layer has one or plural holes disposed at a position directly under the key top, and a luminescent part is formed in the holes; and a switch contact part disposed on the substrate and having a point of contact that is switched by pressing of the key top, wherein a size of the luminescent part is set to be smaller as compared with the key top.

Regarding the rubber sheet, it is preferable to use one having a boss disposed at a position that can be in abutment with the switch contact part. The switch contact part may be, for example, a dome switch, and it is preferable to use a dome switch of a structure having a lower fixed electrode formed on the substrate and a dome-shaped upper hollow electrode disposed on a surface of the substrate so as to cover the lower fixed electrode.

Regarding the EL sheet, in a case in which one luminescent part is disposed corresponding to the key top, it is desirable to dispose a transparent electrode on an upper surface of the luminescent part and to set the size of the transparent electrode to be larger as compared with the luminescent part. In a case in which plural luminescent parts are disposed corresponding to the key top, it is desirable to dispose transparent electrode upper surfaces of said plurality of luminescent parts so as to cover the luminescent parts in their entirety. The transparent electrode is preferably formed on a lower surface of the upper sheet layer disposed on top of the resist layer. Also, regarding the EL sheet, in a case in which a lower sheet layer is disposed under the resist layer and a back surface electrode is disposed on a back surface of the resist layer, it is desirable to use a back surface electrode of a construction having an electrode principal part in abutment with a rear surface of the luminescent part and isolated from an upper surface of the lower sheet layer so as not to be in abutment, and an electrode frame part in contact with said resist layer, at least with a peripheral portion of the luminescent part, and in abutment with the upper surface of the lower sheet layer.

### [EFFECTS OF THE INVENTION]

As described above, in the case of an EL-illuminated switch according to claim 1, 2, 3, 6 or 7 of the present invention, it is so constructed that though the luminescent part is disposed in the EL sheet at a position directly under the key top, a rubber sheet is disposed directly under the EL sheet. Therefore, the pressing force of the key top is absorbed by the rubber sheet, and the pressing force applied to the luminescent part is alleviated, whereby the deterioration of the luminescent part due to outside pressure can be restrained with certainty. The deterioration of the luminescent part due to outside pressure can be restrained without causing unevenness of illumination, thereby giving a great significance in achieving a higher performance and improving the durability.

In the case of an EL-illuminated switch according to claim 4, 5, 6 or 7 of the present invention, it is so constructed that though the luminescent part formed in the resist layer contained in the EL sheet is positioned directly under the key top, the size of the luminescent part is set to be smaller as compared with the key top. Therefore, the pressing force of the key top is dispersed to the luminescent part and to the peripheral portion of the luminescent part of the resist layer, whereby the pressing force applied to the luminescent part is alleviated. Therefore, the deterioration of the luminescent part due to outside pressure can be restrained without causing unevenness of illumination, thereby giving a great significance in achieving a higher performance and improving the durability.

In the case of an EL-illuminated switch according to claim 8 or 9 of the present invention, it is so constructed that a rubber sheet is disposed under the EL sheet, so that the pressing force of the key top is absorbed by the rubber sheet, and the pressing force applied to the luminescent part is further alleviated, whereby the deterioration of the luminescent part due to outside pressure can be restrained with certainty.

In the case of an EL-illuminated switch according to claim 10 or 12 of the present invention, it is so constructed that the size of the transparent electrode, which is positioned directly under the key top and serves to energize the luminescent part, is set to be larger than that of the luminescent part, so that the pressing force of the key top is dispersed, via the transparent electrode, to the luminescent part and to the peripheral portion of the luminescent part in the resist layer. Therefore, the pressing force applied to the luminescent part from the front surface side thereof is further alleviated by the transparent electrode, whereby the deterioration of the luminescent part due to outside pressure can be restrained with certainty.

In the case of an EL-illuminated switch according to claim 11 or 12 of the present invention, it is so constructed that a plurality of luminescent parts are disposed corresponding to the key top, and a transparent electrode is disposed on the upper surface of the plurality of luminescent parts so as to cover the luminescent parts in their entirety, so that the pressing force of the key top is dispersed, via the transparent electrode, to the plural luminescent parts and to the peripheral portions of the luminescent parts in the resist layer. Therefore, the pressing force applied to the luminescent parts from the front surface side thereof is further alleviated by the transparent electrode, whereby the deterioration of the luminescent part due to outside pressure can be restrained with certainty.

In the case of an EL-illuminated switch according to claim 11 of the present invention, it is so constructed that the back surface electrode, which is positioned directly under the key top and serves to energize the luminescent part, includes an electrode principal part to be in contact with the back surface of the luminescent part is isolated from the lower sheet. Therefore, the pressing force applied to the luminescent part from the back surface side thereof will be extremely small, whereby the deterioration of the luminescent part due to outside pressure can be restrained with certainty.

### [BRIEF DESCRIPTION OF THE DRAWINGS]

The invention will now be particularly described by way of example only with reference to the drawings, in which:
[FIG. 1] is a view for describing an embodiment of the present invention and is a schematic cross-sectional view of an EL-illuminated switch;
[FIG. 2] is a cross-sectional view of an EL sheet constituting the EL-illuminated switch;
[FIG. 3] is a view for describing a modified example of the EL-illuminated switch and is a schematic cross-sectional view of an EL sheet; and
[FIG. 4] is a plan view showing a positional relationship of a luminescent part formed in the bank resist layer of the EL sheet.

### [BEST MODES FOR CARRYING OUT THE INVENTION]

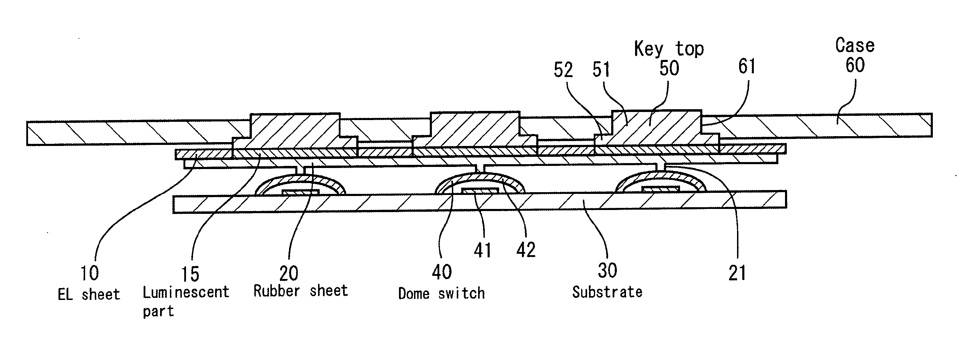

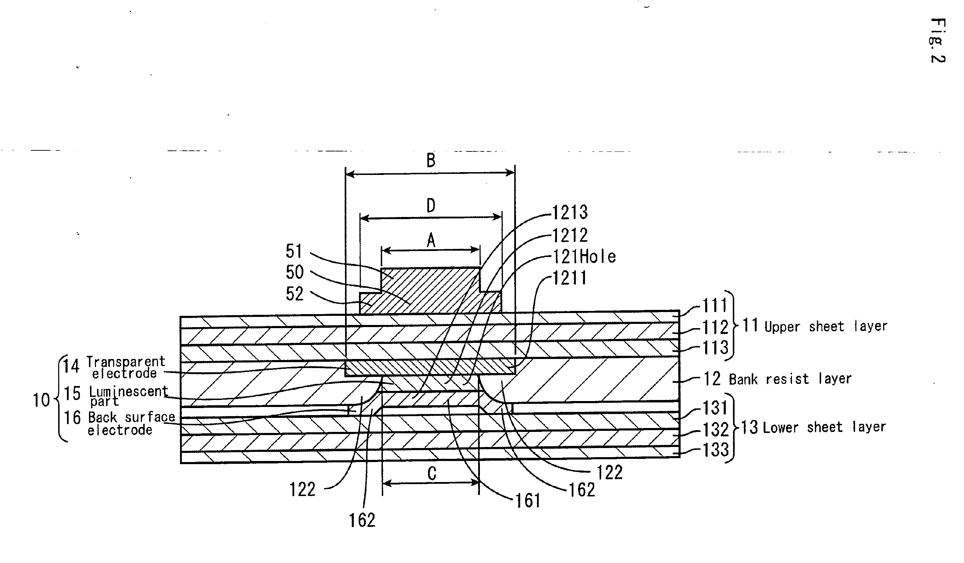

Hereafter, the first embodiment of the present invention will be described with reference to Figs. 1 and 2. Fig. 1 is a schematic cross-sectionalview of the EL-illuminated switch. Fig. 2 is a cross-sectional view of an EL sheet constituting the EL-illuminated switch.

The EL-illuminated switch shown here is provided in mobile station wireless communication apparatus, PDA (Personal Digital Assistants) and other portable information terminal apparatus, and has an EL sheet 10, a rubber sheet 20, a dome switch 40, and a substrate 30, as illustrated in Fig. 1. The EL-illuminated switch is mounted on the rear surface side of a plurality of key tops 50 that are arranged in a lattice form on the surface of a case 60 of the same apparatus. The EL-illuminated switch performs a switching function of converting an operation input given through the key tops 50 into contact signals and an illuminating function of radiating light onto the key tops 50. Hereafter, details of each part will be described.

Here, regarding the key tops 50, those made of a resin molded article having a square shape and having a flat bottom surface are used here. Namely, the key tops 50 each have a main body 51 having a square shape as viewed in a front view and a flange part 52 having a square shape as viewed in a rear view, and are inserted into the holes 61 formed on the surface of the case 60 from the rear surface side. The lower surface of the flange part 52 is in abutment with and supported by the EL sheet 10 of the EL-illuminated switch to be freely movable upwards and downwards.

The EL sheet 10 is a flexible thin film including an upper sheet layer 11, a bank resist layer 12, and a lower sheet layer 13, as illustrated in Fig. 2. A luminescent part 15 is formed in the bank resist layer 12 at a position directly under the key top 50. The luminescent part 15 is an EL element formed with an organic material layer. On the upper surface thereof, a transparent electrode 14 is formed as a positive electrode that is needed for energizing the luminescent part 15. On the other hand, on the lower surface thereof, a back surface electrode 16 is formed as a negative electrode that is needed for energizing the luminescent part 15.

The upper sheet layer 11 is of a construction having a passivation-film-protective resist layer 111, a passivation film 112, and a transparent film substrate 113, and is transparent so as to transmit the light of the luminescent part 15. On the other hand, the lower sheet layer 13 is of a construction having a transparent film substrate 131, a passivation film 132, and a passivation-film-protective resist layer 133.

An electric power source line for positive electrode (not illustrated) is formed on the transparent film substrate 113, and the transparent electrode 14 formed on an upper surface of the EL sheet 10'is in contact with the electric power source line for positive electrode. On the other hand, an electric power source line for negative electrode (not illustrated) is formed on the transparent film substrate 131, and the back surface electrode 16 formed on a lower surface of the EL sheet 10 is in contact with the electric power source line for negative electrode.

Namely, when an electric power source voltage is input to the above electric power source line, the luminescent part 15 is energized via the transparent electrode 14 and the back surface electrode 16. In accordance with this, the luminescent part 15 operates to emit light, and the output light thereof is guided to the key top 50 via the transparent electrode 14 and the upper sheet layer 11, whereby the light is radiated onto the key top 50.

Here, details of the transparent electrode 14, the luminescent part 15, and the back surface electrode 16 will be described.

Holes 121 are each formed by photolithography on the bank resist layer 12 at a position directly under the key tops 50. The hole 121 is a communication hole having a square hole 1211, a square-shaped hole 1212, and a square-shaped hole 1213 with a tilted surface that is curved so as to be widened in the downward direction.

The luminescent part 15 is formed in the hole 1212. In the hole 1211, the transparent electrode 14 is formed, whereas in the hole 1213, the back surface electrode 16 is formed. The transparent electrode 14 is formed on the rear surface of the upper sheet 11, and the back surface electrode 16 is formed on the rear surface of the bank resist layer 12.

The lower surface of the transparent electrode 14 is in surface contact with the upper surface of the luminescent part 15. On the other hand, the upper surface of the transparent electrode 14 is flush with the (upper surface of the) bank resist layer 12. The shape of the transparent electrode 14 is the same as that of the key top 50, and is a square here. The length of one side of the transparent electrode 14 (which is represented as B in Fig 2) is set to be identical to or larger than the length of one side of the flange part 52 of the key top 50 (which is represented as D in Fig. 2).

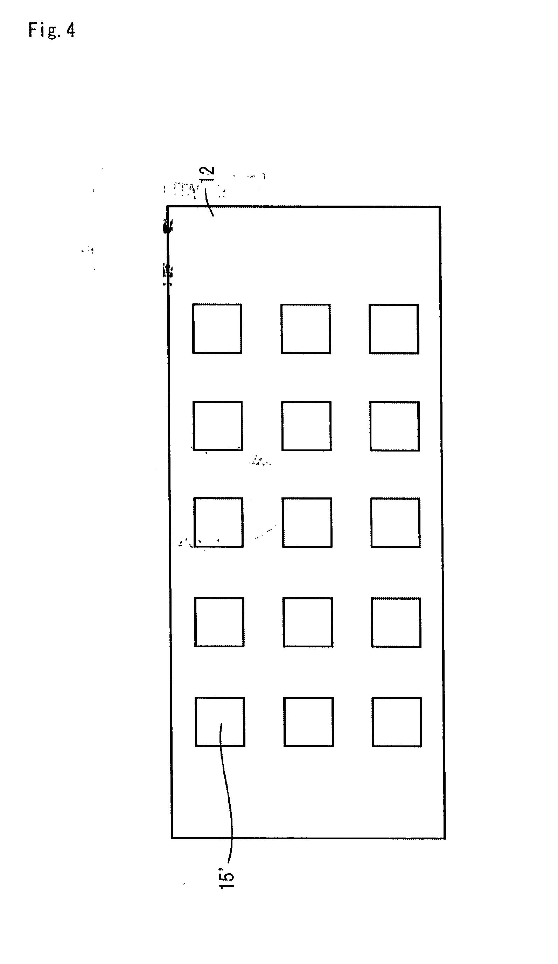

The shape of the luminescent part 15 is the same as that of the key top 50, and is a square here (See Fig. 4). The length of one side of the luminescent part 15 (which is represented as C in Fig. 2) is set to be identical to or larger than the length of one side of the main body 51 of the key top 50 (which is represented as A in Fig. 2) and to be smaller than the length (D) of one side of the flange part 52 of the key top 50.

The back surface electrode 16 is of a construction having an electrode principal part 161 which is a part in contact with the rear surface of the luminescent part 15 and isolated from the upper surface of the lower sheet layer 13 so as not to be in abutment and an electrode frame part 162 which is a part in contact with the peripheral part 122 of the bank resist layer 12 adjacent to the luminescent part 15 and is in abutment with the upper surface of the lower sheet layer 13.

The shape of the back surface electrode 16 is the same as that of the key top 50, and is a square here. The length of one side of the back surface electrode 16 is set to be identical to that of the transparent electrode 14.

To sum up, the transparent electrode 14, the luminescent part 15, and the back surface electrode 16 are formed at a position that comes directly under the key top 50 on the bank resist layer 12; the shapes of these are set to be the same as that of the key top 50; and the length of one side of these are each set so as to satisfy a relationship B ≥ D > C ≥ A with the key top 50.

Under the above-described EL sheet 10, a rubber sheet 20 is bonded as illustrated in Fig. 1. On the lower surface of the rubber sheet 20, a boss 21 is formed at a position directly under the transparent electrode 14, the luminescent part 15, and the back surface electrode 16. Namely, the boss 21 is disposed at a position that can be in abutment with the dome switch 40.

The dome switch 40 that switches its point of contact by pressing of the key top 50 is provided on the surface of the substrate 30 and at a position directly under the transparent electrode 14, the luminescent part 15, the back surface electrode 16, and the boss 21. The EL sheet 10 and the rubber sheet 20 are bonded (not shown) on the surface of the substrate 30 so as to cover the dome switch 40.

The dome switch 40 is of a structure having a plate-shaped lower fixed electrode 41 formed on the substrate 30 and a dome-shaped upper hollow electrode 42 disposed on the surface of the substrate 30 so as to cover the top of the lower fixed electrode 41. On the surface of the substrate 30, an electric wiring pattern (not illustrated) is formed that is respectively connected electrically to the lower fixed electrode 41 and the upper hollow electrode 42.

When a pressing force is applied to the key top 50, the EL sheet 10 and the rubber sheet 20 are deformed to warp downwards by abutment of the flange part 52 thereof. In accordance therewith, the boss 21 comes into abutment with the apex part of the upper hollow electrode 42. This deforms the upper hollow electrode 42, whereby the central part thereof is warped downwards to come into contact with the lower fixed electrode 41. Thereafter, when the action of the pressing force on the key top 50 ceases, the deformation of the EL sheet 10 and the rubber sheet 20 is relieved and they become restored to their original shape. In accordance therewith, the deformation of the upper hollow electrode 42 is also restored to its original shape, whereby the upper hollow electrode 42 is separated from the lower fixed electrode 41. Namely, a contact signal corresponding to the operation input of the key top 50 is output through the above-described wiring pattern.

According to the EL-illuminated switch constructed as described above, although the luminescent part 10 formed on the EL sheet 10 is positioned directly under the key top 50, the pressing force applied to the luminescent part 15 is extremely small as compared with that of the conventional one. The reason is as follows.

First of all, since the rubber sheet 20 is disposed directly under the EL sheet 10, the pressing force of the key top 50 is absorbed by the rubber sheet 20. Secondly, since the size of the luminescent part 15 is set to be smaller as compared with the key top 50, the pressing force of the key top 50 is dispersed to the luminescent part 15 and to the peripheral part 122 of the bank resist layer 12 adjacent to the luminescent part 15. Thirdly, since the size of the transparent electrode 14 is set to be larger than that of the luminescent part 15, the pressing force of the key top 50 is dispersed via the transparent electrode 14 to the luminescent part 15 and to the peripheral part 122 of the bank resist layer 12. Fourthly, since the electrode principal part 161 among the parts of the back surface electrode 16 floats up/is raised from the lower sheet layer 13, the force acting on the luminescent part 15 from the rear surface side thereof will be extremely small.

Namely, though the pressing force of the key top 50 is applied to the EL sheet 10 and this deforms the part of the EL sheet 10 located directly under the key top 50, the pressing force applied to the luminescent part 15 is alleviated to be extremely small as a result of the above, so that the deterioration of the luminescent part 15 due to outside pressure can be restrained with certainty. Also, since the main body 51 of the key top 50 and the luminescent part 15 have the same positional relationship, shape, and size, it is a matter of course that the whole surface of the key top 50 is irradiated uniformly by the luminescent part 15. To sum up, the deterioration of the luminescent part 15 due to outside pressure can be restrained without causing unevenness of illumination, thereby giving a great significance in achieving a higher performance and in improving the durability of the EL-illuminated switch and further the portable information terminal apparatus.

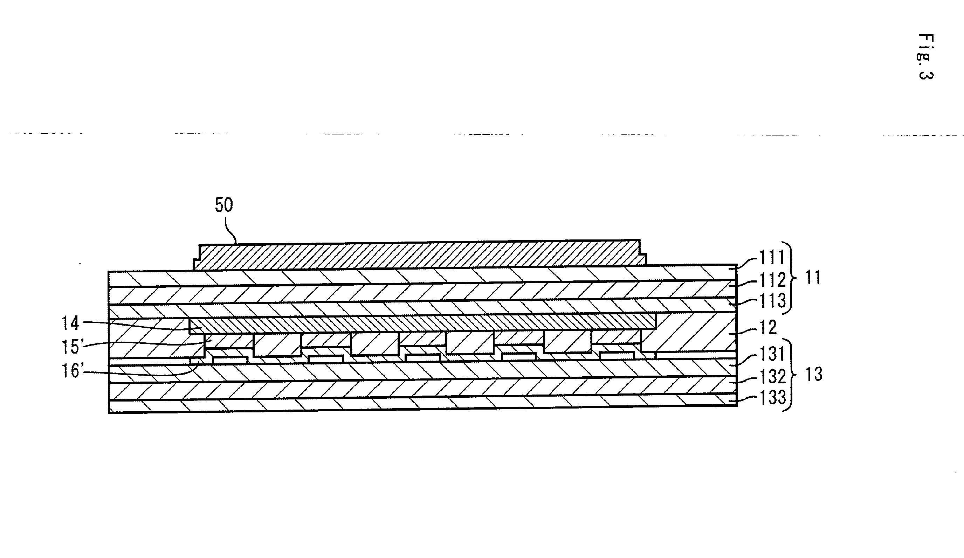

Next, a modified example of an EL-illuminated switch will be described with reference to Figs. 3 and 4. Fig. 3 is a schematic cross-sectional view of an EL sheet constituting the EL-illuminated switch. Fig. 4 is a plan view showing a positional relationship of a luminescent part formed in the bank resist layer of the EL sheet. Here, the same constituent parts as in the above-described EL-illuminated switch will be denoted with the same component numbers, and the description thereof will be omitted.

A large difference from the above-described EL-illuminated switch lies in that a plurality of luminescent parts 15' are formed corresponding to the key top 50. In relation to this, the shape of the back surface electrode 16' is different from that of the above-described EL-illuminated switch. Here, the luminescent parts 15' are arranged in a lattice form, and the transparent electrode 14 is disposed to cover the whole of the upper surface of the plural luminescent parts 15'. The back surface electrode 16' is disposed to cover the whole of the rear surface of the plural luminescent parts 15'.

Even in a case according to such a modified example, since it is so constructed that a plurality of luminescent parts 15' are disposed and arranged in a lattice form at a position directly under the key top 50, and the transparent electrode 14 is disposed on the upper surfaces of said plurality of luminescent parts 15' so as to cover the luminescent parts in their entirety, it produces an effect similar to that of the above-described EL-illuminated switch. In particular, most of the pressing force of the key top 50 is received by the lattice-shaped bank resist layer 12, and the pressing force acting on the luminescent parts 15' is smaller as compared with that of the above-described EL-illuminated switch, so that it is extremely effective. Also, by making the lattice width of the bank resist layer 12 to be finer, the key top 50 will be uniformly illuminated in a manner totally similar to that of the above-described EL-illuminated switch.

Here, the EL-illuminated switch according to the present invention is not limited to the above embodiments. For example, regarding the key top 50, those in which adjacent key tops of the plurality of key tops are connected with each other by a flange part can be applied as well. Also, regarding the shape of the key tops 50, the transparent electrode, the holes 121 formed in the bank resist layer 12, the transparent electrode 14, the back surface electrode 16, or others, any shape other than a square can also be applied as long as these have the same function as described above. Regarding the rubber sheet 20, the method of fixation thereof and the like are not significant including the presence or absence of the boss 21 as long as it is disposed directly under the EL sheet 10. Regarding the dome switch 40, the kind thereof, the method of fixation thereof, and the like are not significant as long as it is a switch contact part that is disposed at a position under the luminescent part 15 on the substrate 30 and switches its point of contact by pressing of the key top 50. Regarding the bank resist layer 12, any change in design can be made including the position and the size of the transparent electrode 14 or the back surface electrode 16 as long as the luminescent part 15 is formed at a position directly under the key top 50 and the luminescent part 15 is energizable.

### [DESCRIPTION OF SYMBOLS]

- 10: EL sheet
- 11: Upper sheet layer
- 12: Bank resist layer
- 13: Lower sheet layer
- 14: Transparent electrode
- 15, 15': Luminescent part
- 16, 16': Back surface electrode
- 161: Electrode principal part
- 162: Electrode frame part
- 20: Rubber sheet
- 21: Boss
- 30: Substrate
- 40: Dome switch
- 41: Lower fixed electrode
- 42: Upper hollow electrode
- 50: Key top

## Claims

1. An EL-illuminated switch disposed on a rear surface of a key top for illuminating the key top with light, **characterized by** comprising:
a substrate;
an EL sheet disposed on the substrate and having one or plural luminescent parts directly behind the key top;
an elastomeric sheet disposed directly behind the EL sheet; and
a switch contact part disposed on the substrate at a position behind the luminescent part and having a point of contact that is switchable by pressing of the key top.

2. An illuminated switch assembly comprising:
a key top
an EL sheet for illuminating the key top with light;
an elastomeric sheet;
switch contact means, and
a substrate;
wherein said EL sheet has one or more luminescent parts directly behind the key top;
said rubber sheet is disposed directly behind said EL sheet; and
said switch contact means comprises a switch contact part disposed on the substrate at a position behind the luminescent part having a point of contact that is switchable by pressing of the key top.

3. The illuminated switch according to claim 1 or claim 2, wherein the elastomeric sheet has a boss abuttable with the switch contact part.

4. An EL-illuminated switch on a rear surface of a key top for illuminating the key top with light, **characterized by** comprising:
a substrate;
an EL sheet which is a flexible thin film disposed on the substrate and including a resist layer, wherein the resist layer has one or more holes directly behind the key top, and having a luminescent part in the hole or holes; and
a switch contact part on the substrate and having a point of contact that is switchable by pressing of the key top,
wherein the size of the luminescent part smaller than the key top.

5. An illuminated switch assembly comprising:
a key top
an EL sheet for illuminating the key top with light;
switch contact means, and
a substrate;
wherein said EL sheet is a flexible thin film disposed on the substrate and including a resist layer, said resist layer having one or more holes directly behind said key top, a luminescent part being provided in said hole or holes;
said switch contact means comprises a switch contact part disposed on the substrate having a point of contact that is switchable,by pressing of the key top; and
the size of the luminescent part is smaller than the key top.

6. The illuminated switch according to any preceding claim, wherein the switch contact part is a dome switch.

7. The illuminated switch according to claim 6, wherein the switch contact part is a dome switch of a structure having a fixed electrode formed on the substrate and a dome-shaped hollow electrode disposed on a surface of the substrate so as to cover the fixed electrode.

8. The illuminated switch according to claim 4 or 5, further comprising an elastomeric sheet disposed behind the EL sheet.

9. The illuminated switch according to claim 8, wherein the elastomeric sheet has a boss abuttable with the switch contact part.

10. The illuminated switch according to any one of claims 1, 2, 4 or 5 in which one luminescent part is disposed corresponding to the key top, wherein the EL sheet has a transparent electrode disposed on an upper surface of the luminescent part, and wherein the size of the transparent electrode larger than the luminescent part.

11. The illuminated switch according to any one of claims 1, 2, 4 or 5 in which plural luminescent parts are disposed corresponding to the key top, wherein the EL sheet has a transparent electrode disposed on upper surfaces of said plurality of luminescent parts so as to cover the luminescent parts in their entirety.

12. The illuminated switch according to claim 10 or 11 wherein the EL sheet is of a structure having an upper sheet layer on top of the resist layer, **characterized in that** the transparent electrode is formed on a lower surface of the upper sheet layer.

13. The illuminated switch according to any one of claims 1, 2, 4 or 5 wherein the EL sheet is of a structure having a lower sheet layer under the resist layer and having a back surface electrode of the luminescent part disposed on a back surface of the resist layer, **characterized in that** the back surface electrode is of a construction including:
an electrode principal part in abutment with a rear surface of the luminescent part and isolated from an upper surface of the lower sheet layer so as not to be in abutment, and
an electrode frame part in contact with said resist layer, at least with a peripheral portion of the luminescent part, and in abutment with the upper surface of the lower sheet layer.
